# EUROPEAN PATENT APPLICATION

(11) **EP 1 890 401 A1**
(43) Date of publication of application: **20.02.2008**
(21) Application number: 06757071.3
(22) Date of filing: 06.06.2006
(51) Int. Cl.: H04B 7/26, H04L 1/00

(54) **WIRELESS COMMUNICATION APPARATUS AND WIRELESS COMMUNICATION METHOD**

(30) Priority: 10.06.2005 JP 2005170752
(71) Applicant: NTT DoCoMo Inc., Chiyoda-Ku Tokyo 100-6150 (JP); NEC Corporation, Minato-ku Tokyo 108-8001 (JP); Fujitsu Ltd., Kawasaki-shi, Kanagawa 211-8588 (JP)
(72) Inventor: SAWAHASHI, Mamoru IP Dpt. NTT DoCoMo, Inc., Chiyoda-ku, Tokyo 1006150 (JP); HIGUCHI, Kenichi IP Dpt. NTT DoCoMo, Inc., Chiyoda-ku, Tokyo 1006150 (JP); ATARASHI, Hiroyuki IP Dpt. NTT DoCoMo, Inc., Chiyoda-ku, Tokyo 1006150 (JP); MOCHIZUKI, Takashi c/o NEC Corporation, Tokyo 1008001 (JP); NAKAMURA, Mitsuyuki c/o NEC Corporation, Tokyo 1008001 (JP); SEKI, Hiroyuki c/o FUJITSU LIMITED, Kanagawa 2118588 (JP)
(74) Representative: HOFFMANN EITLE
(86) International application number: PCT/JP2006/311332
(87) International publication number: WO 2006/132247

(57) **Abstract**

A disclosed radio communications apparatus adaptively controls a modulation method and coding rate (MCS) of a data channel in accordance with received channel quality information (CQI). This apparatus includes a first data table indicating a first corresponding relationship of the MCS with respect to the CQI; a second data table indicating a second corresponding relationship of transmission power of a control channel with respect to the CQI; a first selection portion that accesses the first data table so as to select the MCS of the data channel in accordance with the received CQI; a second selection portion that accesses the second data table so as to select the transmission power of the control channel in accordance with the received CQI; and a transmission portion that transmits the data channel in accordance with the selected MCS and the control channel at the selected transmission power.

## Description

### TECHNICAL FIELD

The present invention relates generally to a radio communications field of technology, and specifically to a radio communications apparatus and a radio communications method according to an Adaptive Modulation and Coding (AMC) method.

### BACKGROUND ART

In a radio communications system, specifically, a mobile communications system, since a communications environment is constantly changing, signal quality is changing to a greater or lesser extent. Communications quality is expressed by channel quality information (or Channel Quality Indicator (CQI)), a specific example of which is a ratio of desired signal power with respect to undesired signal power such as Signal-to-Noise power ratio (SNR), Signal-to-Interference power Ratio (SIR), Signal-to-Interference plus Noise power Ratio (SINR) or the like. In a current communications system such as a High Speed Downlink Packet Access (HSDPA) system, Transmission Power Control (TPC), Adaptive Modulation and Coding (AMC) control, or the like are performed in order to improve the communications quality in the radio communications system. For detailed information on the TPC and AMC, see Non-patent Publication 1 listed below.

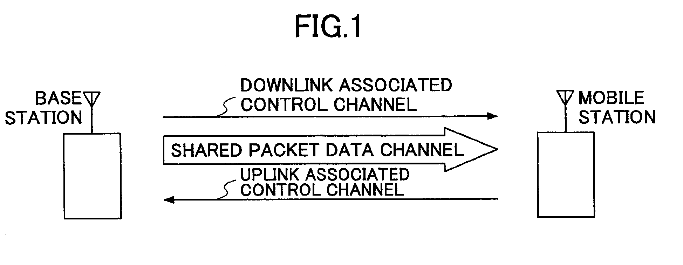

FIG. 1 shows a schematic view of the radio communications system, and specifically depicts a shared packet data channel and a downlink associated control channel being transmitted in downlink and an uplink associated control channel being transmitted in uplink. It is noted that an uplink data channel is not illustrated in FIG. 1 for simplicity. The shared packet data channel is used to transmit data which correspond to a payload. While the shared packet data channel is transmitted according to the Adaptive Modulation and Coding (AMC) method, transmission power of this channel is maintained at a constant level. Generally, the AMC adaptively changes modulation methods and coding rates every Transmission Time Interval (TTI) of a packet of, for example, 2 ms in accordance with the communications environment, thereby enhancing transmission efficiency. The shared packet data channel is shared by plural users under control of a Time Division Multiplexing (TDM) method. The downlink associated control channel primarily transmits information necessary for transmission of the shared packet data channel. The downlink associated control channel is transmitted on a fixed modulation method and coding rate, while transmission power control (TPC) is performed. The downlink associated control channel transmits a packet number, a modulation method and coding rate for the shared packet data channel, a transmission power control bit, a retransmission control bit, or the like. The uplink associated control channel is also transmitted on a fixed modulation method and coding rate, while the transmission power control is performed. The uplink associated control channel transmits the channel quality information (CQI), the transmission power control bit, the retransmission control bit, or the like.

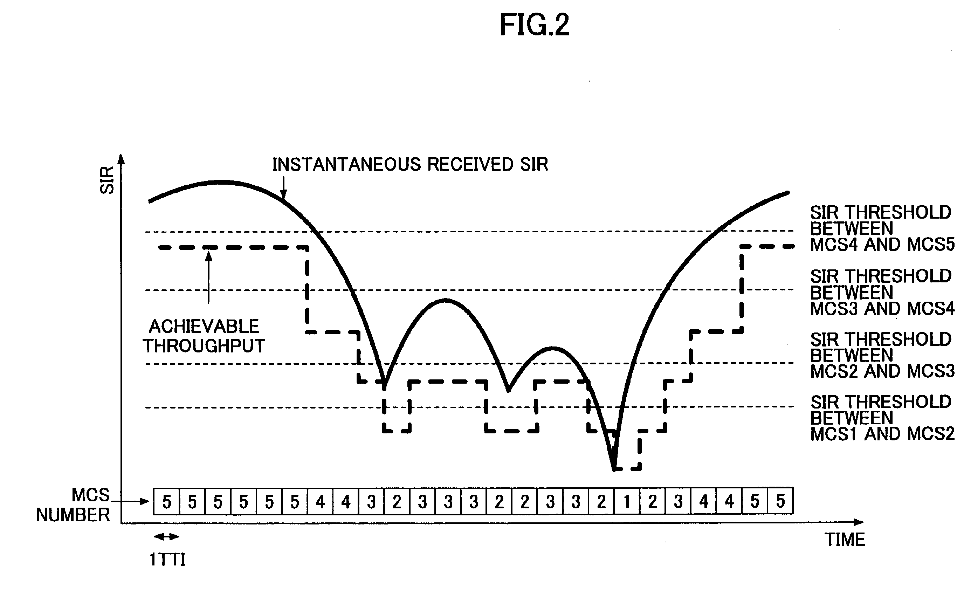

FIG. 2 is an explanatory view of the operation principle of the AMC. In FIG. 2, the horizontal axis represents time and the vertical axis represents the SIR. The SIR indicates signal quality of a signal received at a mobile station and may correspond to, for example, the CQI to be provided through the uplink associated control channel to a base station. Generally, a higher SIR indicates a better communications environment, which enables high quality communications. In the AMC method, it is determined in relation to various SIR values what kinds of modulation methods and coding rates should be employed. In the illustrated example, five combinations of the modulation methods and coding rates are prepared and distinguished by Modulation and Coding Scheme (MCS) numbers 1 through 5 (MCS1 - MCS5). The number of the combinations prepared is optionally determined. The MCS1, which has a minimum modulation order and a minimum coding rate, is to be employed when the communications environment is bad. On the other hand, the MCS5, has the maximum modulation order and the maximum coding rate, is to be employed when the communications environment is ideal. The MCS2, MCS3, and MCS4 are intermediary combinations between the MCS1 and the MCS5. For example, when Quadrature Phase Shift Keying (QPSK), 16 Quadrature Amplitude Modulation (16QAM), and 64 Quadrature Amplitude Modulation (64QAM) are prepared as the modulation methods, for example, the QPSK is employed in the MCS1 and the 64QAM is employed in the MCS5. When 1/3, 1/2, and 3/4 are prepared as the coding rates, 1/3 is employed in the MCS1 and the 3/4 is employed in the MCS5.

In the AMC method, the mobile station receives a pilot signal (also referred to as a pilot channel and a reference signal), which has been known by the mobile station, generates the channel quality information (CQI), and provides the base station with the generated information (CQI) through the uplink associated control channel. The base station determines an appropriate combination of the modulation method and coding rate in accordance with the provided information (CQI), provides the mobile station with the determined combination through the downlink associated control channel, and transmits the shared packet data channel using the combination. The mobile station receives the shared packet data channel using the provided combination of the modulation method and coding rate. By carrying out such operations every packet (every TTI), the data channel can be transmitted by the modulation method and coding rate that are best suited to the communications environment, thereby improving data transmission efficiency.

As stated above, the transmission power control is carried out when the associated control channels are used. The mobile station receives the pilot signal, measures the SIR, which corresponds to the CQI, compares the measured SIR value with a target value, determines contents of the transmission power control bit (normally 1 bit), and provides the base station with the determined contents. The base station increases or decreases the transmission power in accordance with the received transmission power control bit. Namely, the transmission power is increased or decreased adaptively in accordance with the communications environment, thereby improving the control channel quality.

Non-patent Publication 1: 3GPP, TR25.848: "Physical Layer Aspects of UTRA High Speed Downlink Packet Access".

### SUMMARY OF INVENTION

### PROBLEM TO BE SOLVED BY THE INVENTION

As stated, various measures have been taken even in a conventional system in order to improve communications quality. However, those measures are not sufficient for future communications systems, because the future communications systems require further improvement of the communications quality, high capacity, or the like, which thus requires highly efficient use of resources. On the other hand, resources occupied by the control channel cannot be used for the payload. Therefore, the information amount of the control channel is to be desirably reduced as much as possible.

The transmission power control bit is expressed by binary information of 2 bits in many cases. This is advantageous in that the supplied contents are easily addressed, but may be adversely influential on the communications quality if the contents are erroneously received. For example, even when the mobile station requests the base station to increase the transmission power, if the base station erroneously receives the transmission control bit, the base station performs transmission at reduced transmission power, which makes the SIR deterioration at least at the moment, leading to unstable operations of the mobile station.

The present invention has been made in view of the above, and is directed to a radio communications apparatus and method that can reduce the information amount of the control channel and appropriately control the transmission power at which the control channel is transmitted.

### MEANS FOR SOLVING THE PROBLEM

According to one embodiment of the present invention, there is provided a radio communications apparatus that adaptively controls a modulation method and coding rate of a data channel in accordance with received channel quality information. This apparatus includes a first data table indicating a first corresponding relationship of the modulation method and coding rate with respect to the channel quality information; a second data table indicating a second corresponding relationship of transmission power of a control channel with respect to the channel quality information; a first selection portion that accesses the first data table so as to select the modulation method and coding rate of the data channel in accordance with the received channel quality information; a second selection portion that accesses the second data table so as to select the transmission power of the control channel in accordance with the received channel quality information; and a transmission portion that transmits the data channel in accordance with the selected modulation method and coding rate, and the control channel at the selected transmission power.

### ADVANTAGE OF THE INVENTION

According to an embodiment of the present invention, the information amount of the control channel can be reduced and the transmission power control of the control channel can be performed appropriately.

### BRIEF DESCRIPTION OF THE DRAWINGS

FIG. 1 shows a schematic view of a radio communications system;
FIG. 2 is an explanatory view of the operation principle of an Adaptive Modulation and Coding (AMC);
FIG. 3 is a block diagram (part I) of a communications apparatus according to an example of the present invention;
FIG. 4 is another block diagram (part II) of a communications apparatus according to an example of the present invention;
FIG. 5 is a block diagram of an OFCDM-based communications system;
FIG.6 is a flowchart showing a procedure for determining a modulation method, a coding rate, and transmission power;
FIG. 7 is a specific example of a data table;
FIG. 8 shows how to perform adaptive-modulation-method-and-coding control and transmission power control;
FIG. 9 is another specific example of the data table;
FIG. 10 is yet another specific example of the data table; and
FIG. 11 shows SIR numeric ranges.

### LIST OF REFERENCE SYMBOLS

- 302-1 through 302-N_{D}:: data channel processing portion
- 304:: control channel processing portion
- 306:: multiplexing portion
- 308:: inverse fast Fourier portion
- 310:: guard interval insertion portion
- 312:: digital-to-analog (D/A) conversion portion
- 322:: turbo encoder
- 324:: data modulator
- 326:: interleaver
- 328:: serial-to-parallel (S/P) converter
- 330 :: spreading portion
- 342 :: convolution encoder
- 344 :: QPSK modulator
- 346 :: interleaver
- 348 :: serial-to-parallel converter (S/P)
- 350 :: level adjustment portion
- 352 :: data table
- 354 :: control portion
- 402 :: orthogonal modulator
- 404 :: local oscillator
- 412 :: band-pass filter
- 414 :: power amplifier
- 416 :: transmission antenna

### BEST MODE FOR CARRYING OUT THE INVENTION

According to one aspect of the present invention, a data table indicating a corresponding relationship among channel quality information, a modulation method and coding rate of a data channel, and transmission power of a control channel are accessed, and the modulation method and coding rate of the data channel and the transmission power of the control channel are selected in accordance with the received channel quality information. The data channel is transmitted on the selected modulation method and coding rate and the control channel is transmitted at the selected transmission power. Since the channel quality information (CQI) is used to control the transmission power of the control channel, instead of a transmission power control bit, the need of the transmission power control bit, which has conventionally been necessary, can be eliminated. Although the transmission power control bit is expressed by only 1 bit, the bit is associated with every packet. Therefore, a fairly large amount of resources are saved according to an example of the present invention. In addition, in contrast to the transmission power control bit, error correction coding can be applied to the channel quality information (CQI). Therefore, it is possible to transmit a control signal for the transmission power control more accurately by using the channel quality information (CQI) than by using the transmission power control bit, thereby enabling more stable transmission power control.

The channel quality information may be expressed by a desired-to-undesired signal power ratio in a signal received by a communications party.

The channel quality information may be expressed by a combination of a modulation method and coding rate designated by the communications party. With this, the transmission power suited to the communications party can be determined, regardless of interference elimination capability of the communications party.

A radio communications apparatus according to one aspect of the present invention may be provided in the base station of a mobile communications system.

The corresponding relationship in the data table may be determined so that the transmission power becomes lower as signal quality indicating the channel quality information becomes better. Otherwise, the corresponding relationship in the data table may be determined so that the transmission power becomes higher as signal quality indicating the channel quality information becomes worse.

The channel quality information in the data table may be expressed by plural numeric ranges.

One or more boundaries that define the plural numeric ranges may be changed in accordance with retransmission control information received from the communications party. Since the transmission path (transmission channel) is not favorable when retransmission is requested, the retransmission control information can indicate quality of the transmission path, similarly to the channel quality information (CQI). When the data table is updated in accordance with both the channel quality information and the retransmission control information, the transmission power can be controlled in such a manner further suited to an actual communications environment. The determined transmission power may be corrected in accordance the retransmission control information received from the communications party, while the data table is updated.

### < Example 1 >

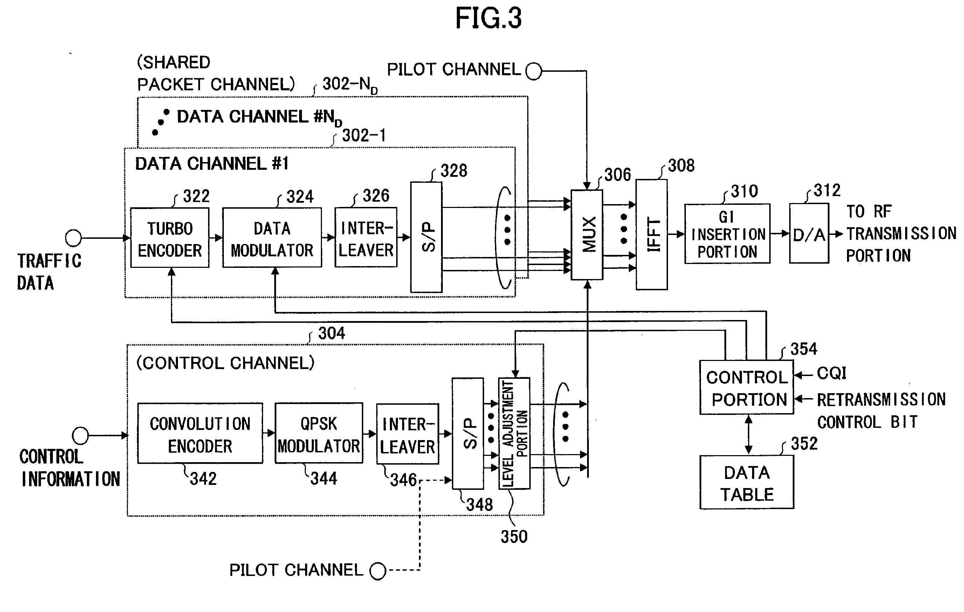

FIG. 3 shows a block diagram of a communications apparatus according to a first example of the present invention. This communications apparatus is typically provided in a base station, but may be provided in a mobile terminal device. The base station is used in a communications system according to an Orthogonal Frequency Division Multiplexing method. The base station has data channel processing portions 302-1 through 302-N_{D}, the number of which is N_{D}, a control channel processing portion 304, a multiplexing portion (MUX) 306, an inverse fast Fourier transformation portion 308, a guard interval insertion portion 310, a digital-to-analog conversion portion (D/A) 312, a data table 352, and a control portion 354. Since the N_{D} data channel processing portions 302-1 through 302-N_{D} have the same configuration and functions, the data channel processing portion 302-1 may represent the others in the following explanation. By the way, each of the N_{D} data channel processing portions 302-1 through 302-N_{D} may process one data channel of one user, and one or more data channel processing portions may process one data channel of one user. The data channel processing portion 302-1 has a turbo encoder 322, a data modulator 324, an interleaver 326, and a serial-to-parallel conversion portion (S/P) 328. The control channel processing portion 304 has a convolution encoder 342, a QPSK modulator 344, an interleaver 346, a serial-to-parallel conversion portion (S/P) 348, and a level adjustment portion 350.

The N_{D} data channel processing portions 302-1 through 302-N_{D} perform base-band processing in order to transmit traffic data in accordance with the OFDM method. The turbo encoder 322 performs error correction coding in order to enhance error resilience of the traffic data. The data modulator 324 employs an appropriate modulation method such as the QPSK, 16QAM, 64QAM or the like so as to modulate the traffic data. Since the AMC control is performed, the modulation methods in the data modulator 324 and the coding rates in the turbo encoder 322 are changed in accordance with instructions from the control portion 354. The interleaver 326 changes the order of the traffic data in accordance with a predetermined pattern. The serial-to-parallel conversion portion (S/P) 328 converts a serial signal sequence (stream) into parallel signal sequences. The number of the parallel signal sequences may be determined depending on the number of sub-carriers.

The control channel processing portion 304 performs base-band processing in order to transmit control information in accordance with the OFDM method. The convolution encoder 342 performs encoding in order to enhance the error resilience of the control information. The QPSK modulator 344 modulates the control information in accordance with the QPSK modulating method. While any appropriate modulation method may be employed, the QPSK modulation method having a small number of the modulation orders is employed in this example since the information amount of the control information is relatively small. The Adaptive Modulation and Coding (AMC) control is not performed in transmitting the control channel, and the same modulation method and coding rate are used regardless of the communications environments. The interleaver 346 changes the order of the control information in accordance with a predetermined pattern. The serial-to-parallel conversion portion (S/P) 348 converts a serial signal sequence (stream) into parallel signal sequences. The number of the parallel signal sequences may be determined depending on the number of sub-carriers. The level adjustment portion 350 adjusts the amplitude (power) of a digital signal indicating the control channel in accordance with an instruction of the control portion 354.

The multiplexing portion 306 multiplexes the traffic data and the control information that have already been processed by the processing portions. The multiplexing may be carried out by any one of a time-multiplexing method, a frequency-multiplexing method, a code-multiplexing method, and a combination of two or more of the above multiplexing methods. In this example, to the multiplexing portion 306 is input a pilot channel, which is in turn multiplexed. In another example, the pilot channel may be input to the serial-to-parallel conversion portion 348, as shown by a dashed line in FIG. 3, and multiplexed in a frequency direction.

The inverse fast Fourier transformation portion 308 performs the inverse fast Fourier transformation on a signal input to the inverse fast Fourier transformation portion 308 so as to modulate the input signal in accordance with the OFDM method.

The guard interval insertion portion 310 adds a guard interval to the modulated signal so as to generate a symbol in accordance with the OFDM method. The guard interval is obtained by replicating a part of the end portion of the symbol to be transmitted.

The digital-to-analog conversion portion (D/A) 312 converts the base-band digital signal into an analog signal.

The data table 352 has a table indicating a corresponding relationship among the channel quality information (CQI), the modulation method and coding rate of the data channel, and the transmission power of the control channel.

The control portion 354 accesses the data table 352 so as to select the modulation method, the coding rate, and the transmission power corresponding to the channel quality information (CQI). The selected modulation method, coding rate, and transmission power are provided to the turbo encoder 322, the data modulator 324, and the level adjustment portion 350. As described later, the control portion 354 may correct the contents to be provided to various elements such as the turbo encoder or the like and the contents of the table, in accordance with the retransmission control bit received from the mobile station.

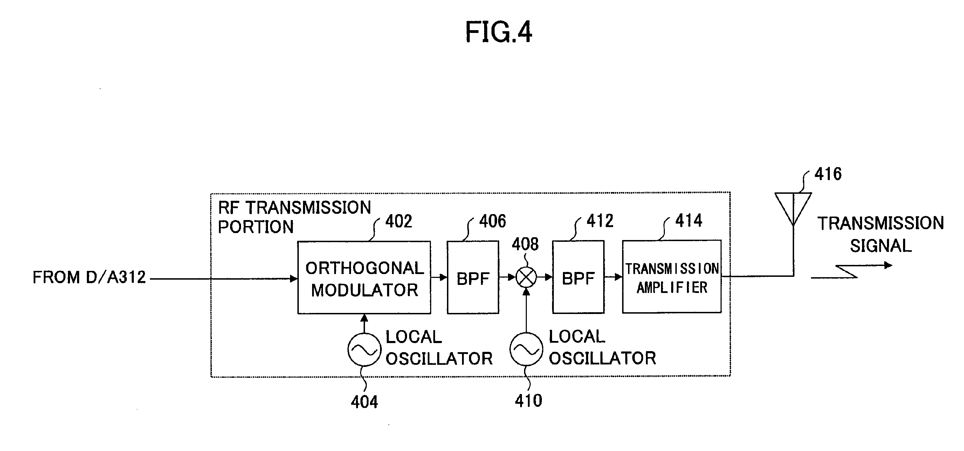

FIG. 4 shows a block diagram of a communications apparatus. Specifically, FIG. 4 shows a RF transmission portion which is a subsequent stage of the digital-to-analog conversion portion 312 shown in FIG. 3. The RF transmission portion has an orthogonal modulator 402, a local oscillator 404, a band-pass filter 406, a mixer 408, a local oscillator 410, a band-pass filter 412, and a power amplifier 414.

The orthogonal modulator 402 generates a quadrature component (Q) and an in-phase component (I) of intermediate frequency from a signal input to the modulator 402. The band-pass filter 406 eliminates frequency components unnecessary for the intermediate frequency band. The mixer 408 converts (up-converts) the intermediate frequency signal to a high frequency signal using the local oscillator 410. The band-pass filter 412 eliminates unnecessary frequency components. The power amplifier 414 amplifies the signal from the band-pass filter 412 in order to transmit the signal from an antenna 416.

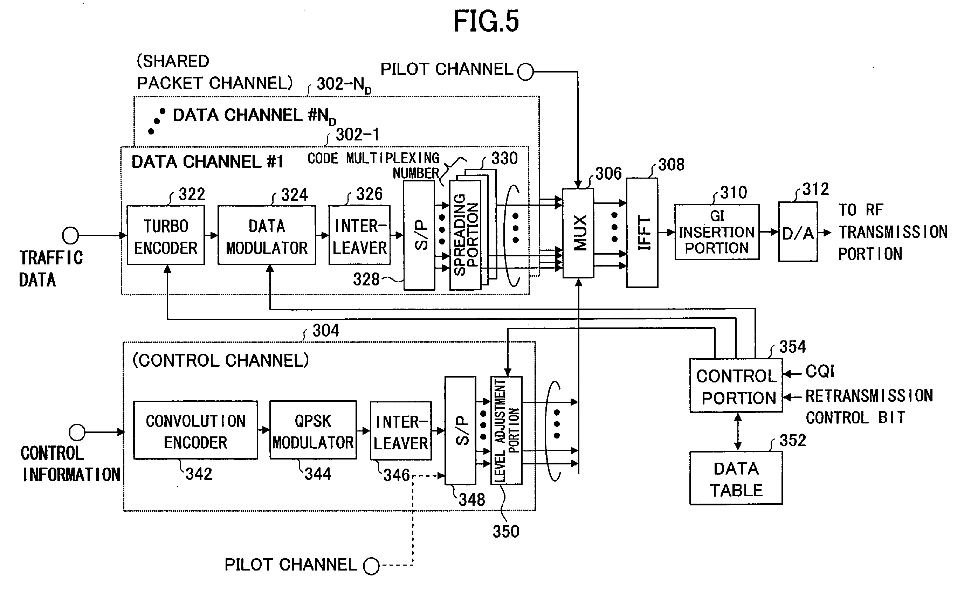

By the way, when an Orthogonal Frequency and Code Division Multiplexing (OFCDM) method is employed instead of the OFDM method, a spreading portion 330 is provided between the serial-to-parallel conversion portion 328 and the multiplexing portion 306, as shown in FIG. 5. The spreading portion 330 performs code-spreading by multiplying each of the parallel signal sequences by a predetermined spreading code. The spreading may be carried out in either one of the time direction and the frequency direction, or a combination of the two directions (two-dimensional spreading).

The traffic data are encoded by the turbo encoder 322 and modulated by the data modulating portion 324. The order of the traffic data is changed by the interleaver 326. Then, the traffic data are made parallel by the serial-to-parallel converter 328. The control information are encoded, modulated, interleaved, and made parallel. The electric power of the parallelized control information is adjusted per sub-carrier component. Subsequently, the data channel and the control channel are multiplexed per sub-carrier by the multiplexing portion 306. The multiplexed channels are modulated in accordance with the OFDM method in the inverse fast Fourier transformation portion 308. The guard interval is added to a signal obtained after the modulation and thus the base-band OFDM symbol is output. The base-band signal is converted into an analog signal, orthogonally modulated by the orthogonal modulator 402 of the RF transmission portion, band-limited, amplified appropriately, and thus transmitted.

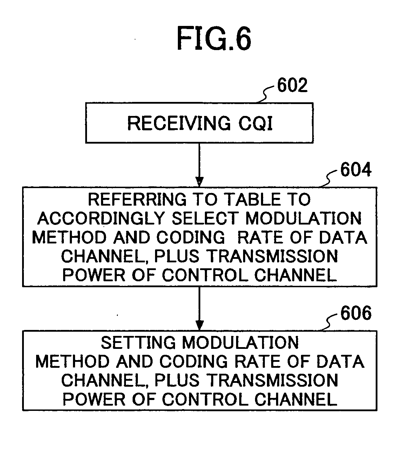

FIG.6 is a flowchart showing a procedure for determining the modulation method, the coding rate, and the transmission power. The procedure starts at Step 602, in which the base station receives the channel quality information (CQI). The channel quality information (CQI) is input to the control portion 354 of FIG. 3.

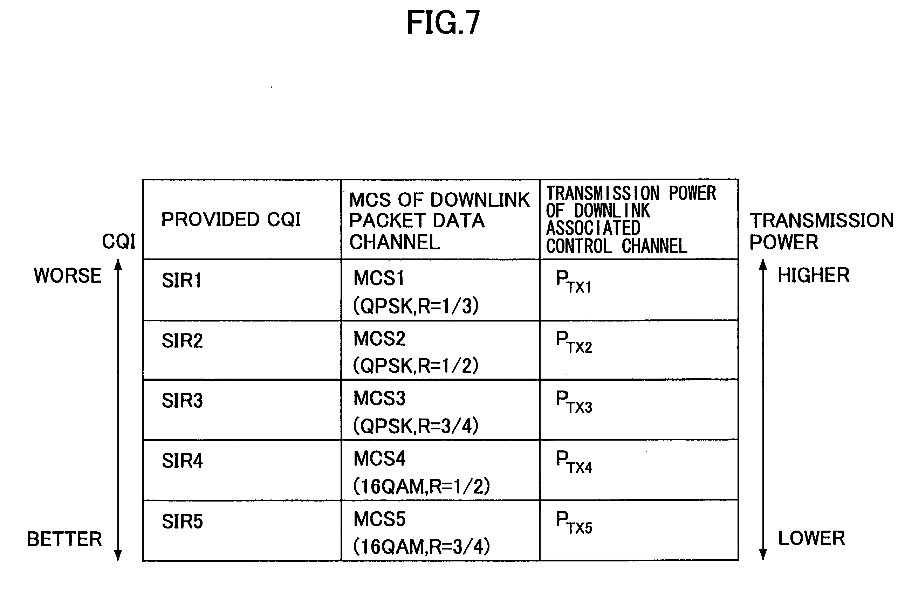

At Step 604, the control portion 354 refers to the data table 352 and selects the modulation method, the coding rate, and the transmission power that correspond to the channel quality information (CQI). The channel quality information (CQI) may be expressed by the SIR. In this case, the table in the data table 352 defines a corresponding relationship between plural numeric ranges SIR1 through SIR5 regarding the SIR, plural combinations MCS1 through MCS5 of the modulation methods and coding rates, and plural values of the transmission power P_{TX1} through P_{TX5}, as shown in FIG. 7. In the illustrated example, QPSK and 16QAM are prepared as the modulation methods, and 1/3, 1/2, and 3/4 are prepared as the coding rates R. When the received CQI belongs to the worst numeric range SIR1, the combination MCS1 (QPSK, R=1/3) which has the lowest modulation order and the minimum coding rate (the maximum redundancy) is selected and the maximum transmission power P_{TX1} is selected. When the received CQI belongs to the best numeric range SIR5, the combination MCS5 (16QAM, R=3/4) which has the highest modulation order and the maximum coding rate (closest to 1) is selected, and the minimum transmission power P_{TX5} is selected. When the received CQI belongs to the numeric range SIR2, the combination of the QPSK and the R=1/2 is selected and the transmission power P_{TX2} (< P_{TX1}) is selected. When the received CQI belongs to the numeric range SIR3, the combination of the QPSK and the R=3/4 is selected and the transmission power P_{Tx3} (< P_{TX2}) is selected. When the received CQI belongs to the numeric range SIR4, the combination of the 16QAM and the R=1/2 is selected and the transmission power P_{TX4} (< P_{TX3}) is selected. Namely, when the CQI indicates bad signal quality, each parameter is determined so that information transmission efficiency is sacrificed and reception signal quality at the mobile station becomes favorable. On the other hand, when the CQI indicates good signal quality, each parameter is determined so that the information transmission efficiency becomes better. Although categorized into five numeric ranges in FIG. 7 for simplicity of explanation, the CQI and the transmission power may be categorized into any appropriate number of numeric ranges.

At Step 606, the data channel is to be transmitted using the selected modulation method and coding rate. In order to realize such transmission, the control portion 354 provides the turbo encoder 322 and the data modulator 324 with the selected the modulation method and coding rate. In addition, the control channel is to be transmitted at the selected transmission power. In order to realize such transmission, the control portion 354 provides the level adjustment portion 350 with the selected transmission power level.

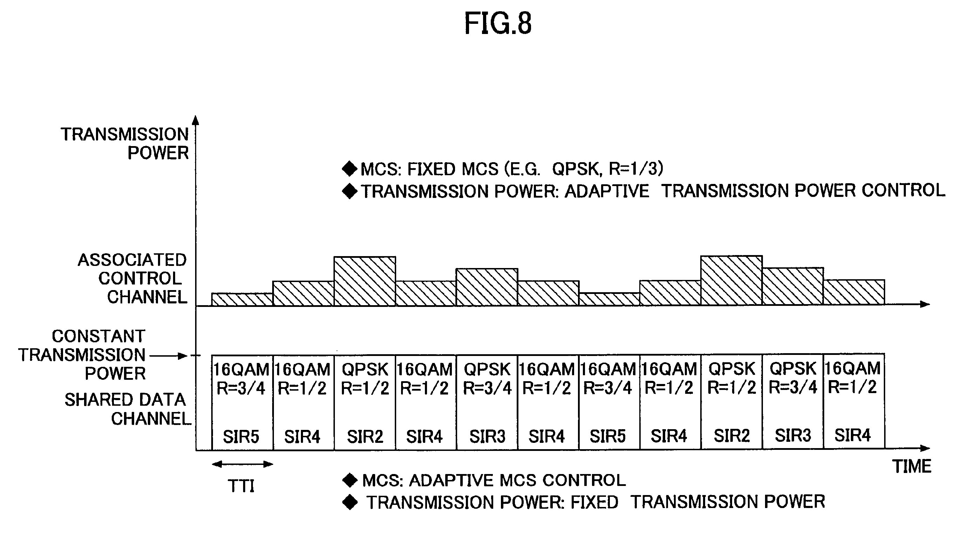

Steps 602 through 606 are repeated per packet, namely, per transmission time interval (TTI). In addition, since the transmission environment is different from mobile station to mobile station, the adaptive control of the modulation method and coding rate is performed for each mobile station. FIG. 8 shows that the transmission power of the associated control channel to transmit the control information is also controlled per TTI, in addition to performing modulation method and coding rate of the shared data channel per TTI. Generally, when the CQI indicates bad signal quality, which may correspond to the SIR1 in the worst case, the modulation order and the coding rate of the data channel are set to be low, and the transmission power of the associated control channel is set to be high. On the other hand, when the CQI indicates good signal quality, which may correspond to the SIR5 in the best case, the modulation order and the coding rate are set to be high, and the transmission power of the associated control channel is set to be low. By the way, regarding the data channel, the transmission power is set at a constant level; regarding the control channel, the modulation method is unchangeably set to the QPSK and the coding rate is unchangeably set to 1/3. Since the control channel has a small information amount, the modulation method and coding rate are selected so that reliability is prioritized more highly than the information transmission efficiency.

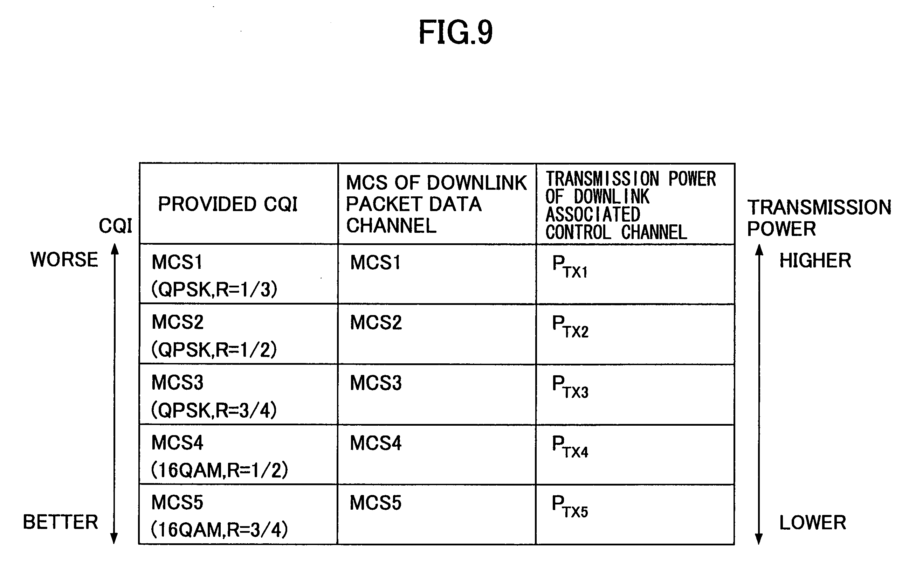

As shown in FIG. 9, the channel quality information (CQI) may be expressed by the combinations MCS1 through MCS5 of the modulation method and coding rate derived by the mobile station, not by the SIRs measured by the mobile station. In this case, the combinations of the modulation method and coding rate (in the middle column of FIGS. 7 and 9) which are prepared in the data table of the base station correspond on a one-to-one basis to the possible combinations (in the left column of FIG. 9) derived by the mobile station. Each of the combinations in the data table has the same modulation method and coding rate as the corresponding combination (in the left column of FIG. 9). When the table format shown in FIG. 9 is employed, the control portion 354 of FIG. 3 refers to the data table 352 so as to select the modulation method, the coding rate, and the transmission power that correspond to the provided channel quality information (CQI), at Step 604 of FIG. 6. The provided channel quality information (CQI) is any one of the MCS1 through the MCS5, and the transmission power corresponding to the combination of the modulation method and coding rate is selected. Subsequently, the control portion 354 of FIG. 3 provides the turbo encoder 322 and the data modulator 324 with the selected contents at Step 606, and the data channel is transmitted according to the provided modulation method and the coding rate, in a similar manner described above. In addition, the transmission power selected by the control portion 354 is provided to the level adjustment portion 350, and the control channel is transmitted at the selected transmission power.

Generally, there are various types of mobile stations. For example, some are so sophisticated as to include an interference eliminating function realized by, for example, an interference canceller; others are so simple as not to include such a function. The sophisticated mobile stations can suppress interference components in the received signal to a great extent, thereby largely improving the signal quality (SIR). Namely, the SIRs provided to the base station are different depending of signal processing methods in the mobile stations, and thus the transmission power of the control channel may be inappropriately selected. On the other hand, the combination of the modulation method and coding rate (referred to as MCS) derived by the mobile station is independent of the signal processing methods in the mobile station. This is because the mobile station derives the MCS so as to maintain a required SIR, and transmits the SIR to the base station. Therefore, it is desirable to provide the MCS from the mobile station to the base station from the viewpoint of determining the transmission power P_{TXi} suited to the mobile station concerned regardless of performance of the interference eliminating function in the mobile station.

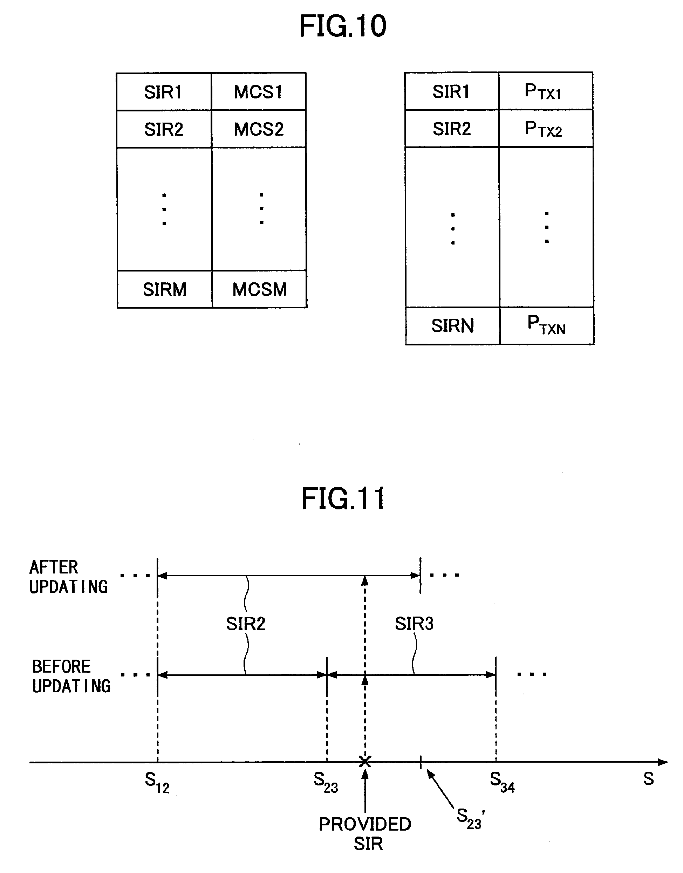

By the way, although the SIRs, the MCSs, and the plural values of the transmission power are categorized into the same number of groups in FIG.7 and FIG. 9, the present invention is not limited to these groups. For example, a corresponding relationship between the SIR and the transmission power may be determined (M ≠ N), in addition to the corresponding relationship between the SIR and the MCS, as shown in FIG. 10. From the viewpoint of controlling the transmission power according to this example of the present invention without changing the existing AMC control scheme, it is desirable to manage individually the table for the AMC and the table for the transmission power control, as shown in FIG. 10.

### < Example 2 >

The uplink associated control channel may include a result of error detection performed on a signal transmitted in downlink. The error detection may typically be Cyclical Redundancy Check (CRC). Specifically, when Automatic Repeat request (ARQ) control is employed, not only the error detection result but also a packet number of a packet to be retransmitted or the like as a retransmission control bit are provided to the base station. When the base station according to a second example or the present invention receives ACK, which indicates that no error is detected, the base station refers to the data table 352 and transmits the control channel at the transmission power corresponding to the received CQI. On the other hand, when the base station receives NACK, which indicates that an error is detected, the base station transmits the control channel at a transmission power (P_{TXi} + ΔP) higher than the transmission power (P_{TXi}) selected from the data table 352. The ΔP can be optionally determined through experiments or simulations. Since errors are a good indication of the transmission environments, the transmission power is further appropriately controlled by using the error detection result in addition to the CQI.

### < Example 3 >

The number of times when NACKs are reported may be listed as an additional item in the data table 352 so as to be associated with other parameters. When appropriate AMC control is being carried out, the number of the reported NACKs is expected to be small. The base station according to a third example of the present invention monitors how many times the NACKs are reported regarding the control channel transmitted at a certain level of transmission power in a predetermined period of time including plural TTIS. When the number of the reported NACKs is larger than a predetermined number, the table is updated so that the control channel is transmitted at higher transmission power (for example, P_{TX2}).

FIG. 11 shows how the numeric range to which the provided SIR should belong is shifted. In FIG. 11, the SIR2 and the SIR3 are shown and boundary values (thresholds) between these numeric ranges are indicated by S₁₂, S₂₃, S₃₄. Similarly, there exist the SIR1, SIR4, and SIR5, and their boundary values, but these are not shown for simplicity of illustration. In this case, it is assumed that the SIR provided from the mobile station has a value indicated by a cross (x). Since the value belongs to the SIR3, the transmission power is P_{TX3} according to the table shown in FIG. 7. Here, it is assumed that the number of NACKs provided to the base station in response to the control channel transmitted at the transmission power P_{TX3} within a predetermined period of time is larger than a predetermined number. In this situation, the boundary S₂₃ is shifted toward larger values to a new boundary S_{23'}. As a result, the SIR indicated by x belongs to the numeric range SIR2 and the transmission power becomes P_{TX2} (> P_{TX3}). With this, when the NACKs are reported many times, the corresponding relationship can be updated so as to use transmission power suitable to the communications environment at the time. FIG. 11 illustrates as if the boundaries S₁₂ and S₃₄ are not shifted while the boundary S₂₃ is shifted, for simplicity of explanation, but this is not necessary. Along with the boundary S₂₃, the boundaries S₁₂ and S₃₄ may be shifted. For example, each boundary may be shifted so that the following relationship: S_{12'} (boundary after shifting) - S₁₂ = S_{23'} - S₂₃ = S_{34'} - S₃₄ = ... = ΔS (+1 dB, for example) is satisfied. In such a manner, each numeric range may be shifted by the same amount.

When the number of the reported NACKs is smaller than a predetermined number, the table does not have to be updated, but may be updated. When updated, the table should be updated in such a manner that the control channel is transmitted at a lower transmission power of, for example, P_{TX4} instead of P_{TX3}. Specifically, the table is updated so that the boundary is shifted toward lower values. Although the smaller number of the reported NACKs is preferable in terms of high quality signal transmission, interference brought on adjacent users may be higher than normal when the quality becomes unnecessarily high. Therefore, when the number of the reported NACKs is less than the predetermined number, it is preferable that the table be updated so that the transmission power is reduced.

Such a change in the boundary values (threshold values) of the SIR has to be reflected to the transmission power. However, it is not necessary to be reflected in the combination of the modulation method and coding rate. Therefore, when the boundary values are fine-tuned in accordance with how often the NACKs are reported, as explained in this example, it is preferable that the table be generated separately as shown in FIG. 9.

Although preferred examples of the present invention have been described, the present invention is not limited to these examples, but various alterations and modifications are possible within the scope of the invention. In addition, although the present invention has been described referring to several individual examples for simplicity of explanations, practicing each of these individual examples is not essential to the present invention, but one or more examples in combination may be implemented in accordance with demand.

This international patent application is based on Japanese Priority Application No. 2005-170752, filed on June 10, 2005, with the Japanese Patent Office, the entire contents of which are hereby incorporated by reference.

## Claims

1. A radio communications apparatus that adaptively controls a modulation method and coding rate of a data channel, in accordance with received channel quality information, the apparatus comprising:
a first data table indicating a first corresponding relationship of the modulation method and coding rate with respect to the channel quality information;
a second data table indicating a second corresponding relationship of transmission power of a control channel with respect to the channel quality information;
a first selection portion that accesses the first data table so as to select the modulation method and coding rate of the data channel in accordance with the received channel quality information;
a second selection portion that accesses the second data table so as to select the transmission power of the control channel in accordance with the received channel quality information; and
a transmission portion that transmits the data channel in accordance with the selected modulation method and coding rate, and the control channel at the selected transmission power.

2. The radio communications apparatus of claim 1, wherein the channel quality information is expressed by a desired to undesired signal power ratio regarding a signal received by a communications party.

3. The radio communications apparatus of claim 1, wherein the channel quality information is expressed by a combination of the modulation method and the coding rate, the combination being designated by a communications party.

4. The radio communications apparatus of claim 1, wherein the radio communications apparatus is provided in a base station of a mobile communications system.

5. The radio communications apparatus of claim 1, wherein the radio communications apparatus is provided in a mobile station of a mobile communications system.

6. The radio communications apparatus of claim 1, wherein the second corresponding relationship of the second data table is determined so that the transmission power is reduced with improvement of signal quality indicated by the channel quality information.

7. The radio communications apparatus of claim 1, wherein the second corresponding relationship of the second data table is determined so that the transmission power is increased with degradation of signal quality indicated by the channel quality information.

8. The radio communications apparatus of claim 1, wherein the channel quality information in the first data table and the channel quality information in the second data table are expressed by plural numeric ranges.

9. The radio communications apparatus of claim 8, wherein one or more boundaries that define the plural numeric ranges are changeable.

10. The radio communications apparatus of claim 1, wherein the selected transmission power is corrected in accordance with retransmission information received from a communications party.

11. A radio communications method comprising steps of:
receiving channel quality information from a communications party;
accessing a data table indicating a corresponding relationship among the channel quality information, a modulation method and coding rate of a data channel, and transmission power of a control channel, so as to select the modulation method and coding rate of the data channel and the transmission power of the control channel in accordance with the received channel quality information; and
transmitting the data channel in accordance with the selected modulation method and coding rate, and the control channel at the selected transmission power.
